# EUROPEAN PATENT SPECIFICATION

(11) **EP 4 282 849 B1**
(45) Date of publication and mention of the grant of the patent: **30.04.2025**
(21) Application number: 23173769.3
(22) Date of filing: 16.05.2023
(51) Int. Cl.: C04B 41/00, F01D 9/00

(54) **LASER TREATMENT OF MACHINED CERAMIC SURFACE FOR SEALING**
LASERBEHANDLUNG EINER BEARBEITETEN KERAMIKOBERFLÄCHE ZUM ABDICHTEN
TRAITEMENT AU LASER D'UNE SURFACE CÉRAMIQUE USINÉE POUR SCELLEMENT

(30) Priority: 27.05.2022 US 202263346536 P; 19.04.2023 US 202318302964
(43) Date of publication of application: 29.11.2023
(73) Proprietor: RTX Corporation, Farmington, CT 06032 (US)
(72) Inventor: LILES, Howard J., Newington, 06111 (US)
(74) Representative: Dehns

(56) References cited:
- EP-A1- 3 951 136
- CN-A- 105 453 232
- US-A1- 2015 275 671

## Description

### BACKGROUND

A gas turbine engine typically includes a fan section, a compressor section, a combustor section and a turbine section. Air entering the compressor section is compressed and delivered into the combustion section where it is mixed with fuel and ignited to generate a high-pressure and temperature exhaust gas flow. The high-pressure and temperature exhaust gas flow expands through the turbine section to drive the compressor and the fan section. The compressor section may include low and high pressure compressors, and the turbine section may also include low and high pressure turbines.

Airfoils and other articles in the engine, particularly the turbine section, are typically formed of a superalloy and may include thermal barrier coatings to extend temperature capability and lifetime. Ceramic materials, such as ceramic matrix composites ("CMC"), are also being considered for such articles. An example for repairing a region of CMC component is disclosed in the patent application EP 3951136.

Among other attractive properties ceramic materials have high temperature resistance. Despite this attribute, however, there are unique challenges to implementing ceramics.

### SUMMARY

A method according to an example of the present disclosure includes machining a closed-pore surface of a silicon-containing gas turbine engine article to produce a feature. The machining causes removal of the closed-pore surface to produce an open-pore machined surface. The open-pore machined surface is then laser-treated to cause formation of an oxide in the silicon-containing gas turbine engine article that seals the open-pore machined surface to produce a closed-pore treated surface.

In a further embodiment of any of the foregoing, the silicon-containing gas turbine engine article is a ceramic matrix composite (CMC).

In a further embodiment of any of the foregoing, the CMC includes silicon carbide.

In a further embodiment of any of the foregoing, the CMC includes silicon nitride.

In a further embodiment of any of the foregoing, the CMC is selected from the group consisting of silicon carbide, silicon nitride, and combinations thereof.

In a further embodiment of any of the foregoing, the machining and the laser-treating are conducted concurrently.

In a further embodiment of any of the foregoing, the machining is conducted along a first direction, and the laser-treatment includes scanning a laser beam across the open-pore machined surface in a second direction that is non-parallel to the first direction.

In a further embodiment of any of the foregoing, the second direction is transverse to the first direction.

The present disclosure may include any one or more of the individual features disclosed above and/or below alone or in any combination thereof.

### BRIEF DESCRIPTION OF THE DRAWINGS

The various features and advantages of the present disclosure will become apparent to those skilled in the art from the following detailed description. The drawings that accompany the detailed description can be briefly described as follows.
Figure 1 illustrates a gas turbine engine.
Figure 2 illustrates a gas turbine engine article.
Figure 3 depicts a method for laser-treating the article after machining to form a feature in the article.

In this disclosure, like reference numerals designate like elements where appropriate and reference numerals with the addition of one-hundred or multiples thereof designate modified elements that are understood to incorporate the same features and benefits of the corresponding elements.

### DETAILED DESCRIPTION

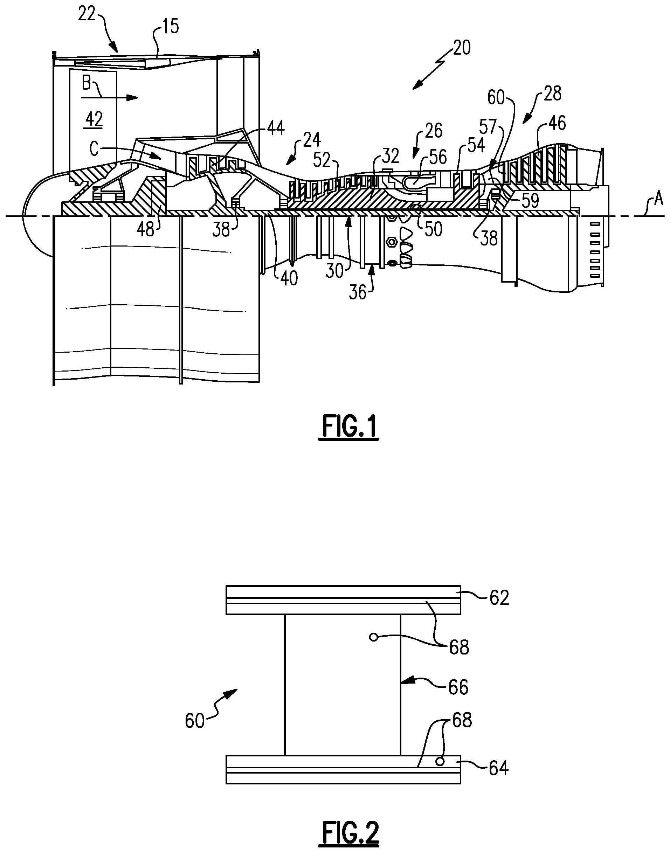

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. The fan section 22 drives air along a bypass flow path B in a bypass duct defined within a housing 15 such as a fan case or nacelle, and also drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects, a first (or low) pressure compressor 44 and a first (or low) pressure turbine 46. The inner shaft 40 is connected to the fan 42 through a speed change mechanism, which in exemplary gas turbine engine 20 is illustrated as a geared architecture 48 to drive a fan 42 at a lower speed than the low speed spool 30. The high speed spool 32 includes an outer shaft 50 that interconnects a second (or high) pressure compressor 52 and a second (or high) pressure turbine 54. A combustor 56 is arranged in the exemplary gas turbine 20 between the high pressure compressor 52 and the high pressure turbine 54. A mid-turbine frame 57 of the engine static structure 36 may be arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded through the high pressure turbine 54 and low pressure turbine 46. The mid-turbine frame 57 includes airfoils 59 which are in the core airflow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of the low pressure compressor, or aft of the combustor section 26 or even aft of turbine section 28, and fan 42 may be positioned forward or aft of the location of gear system 48.

The engine 20 in one example is a high-bypass geared aircraft engine. In a further example, the engine 20 bypass ratio is greater than about six (6), with an example embodiment being greater than about ten (10), and can be less than or equal to about 18.0, or more narrowly can be less than or equal to 16.0. The geared architecture 48 is an epicyclic gear train, such as a planetary gear system or other gear system, with a gear reduction ratio of greater than about 2.3. The gear reduction ratio may be less than or equal to 4.0. The low pressure turbine 46 has a pressure ratio that is greater than about five. The low pressure turbine pressure ratio can be less than or equal to 13.0, or more narrowly less than or equal to 12.0. In one disclosed embodiment, the engine 20 bypass ratio is greater than about ten (10:1), the fan diameter is significantly larger than that of the low pressure compressor 44, and the low pressure turbine 46 has a pressure ratio that is greater than about five 5:1. Low pressure turbine 46 pressure ratio is pressure measured prior to an inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3:1 and less than about 5:1. It should be understood, however, that the above parameters are only exemplary of one embodiment of a geared architecture engine and that the present invention is applicable to other gas turbine engines including direct drive turbofans.

A significant amount of thrust is provided by the bypass flow B due to the high bypass ratio. The fan section 22 of the engine 20 is designed for a particular flight condition -- typically cruise at about 0.8 Mach and about 35,000 feet (10,668 meters). The flight condition of 0.8 Mach and 35,000 ft (10,668 meters), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. The engine parameters described above and those in this paragraph are measured at this condition unless otherwise specified. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45, or more narrowly greater than or equal to 1.25. "Low corrected fan tip speed" is the actual fan tip speed in ft/sec divided by an industry standard temperature correction of [(Tram °R) / (518.7 °R)]^{0.5}. The "Low corrected fan tip speed" as disclosed herein according to one non-limiting embodiment is less than about 1150.0 ft / second (350.5 meters/second), and can be greater than or equal to 1000.0 ft / second (304.8 meters/second).

Figure 2 illustrates an article 60 from the engine 20. To demonstrate an example implementation in accordance with this disclosure, the article 60 is depicted as a turbine vane from the turbine section 28 of the engine 20. A plurality of the turbine vanes are arranged in a circumferential row about the engine central longitudinal axis A. It is to be understood, however, that the article 60 is not limited to vanes or airfoils and that the examples herein may also be applied to blade outer air seals, combustor liners, support rings, or other engine articles that are formed from ceramic material, particularly those along the core gas path C.

The turbine vane is comprised of several sections, including first and second platforms 62/64 and an airfoil section 66 that extends between the platforms 62/64. The airfoil section 66 generally defines a leading edge, a trailing edge, and pressure and suction sides. In this example, the first platform 62 is a radially outer platform and the second platform 64 is a radially inner platform.

The article 60 is formed of a ceramic material. For example, the ceramic material may be a monolithic ceramic, a ceramic matrix composite ("CMC"), or configurations that include both monolithic ceramic and CMC. Example ceramic materials include silicon-containing ceramic, such as but not limited to, silicon carbide (SiC) and/or silicon nitride (Si₃N₄). A CMC is formed of ceramic fiber tows that are disposed in a ceramic matrix. As an example, the CMC may be, but is not limited to, a SiC/SiC composite in which SiC fiber tows are disposed within a SiC matrix. The fiber tows are arranged in a fiber architecture, which refers to an ordered arrangement of the tows relative to one another. A monolithic ceramic does not contain fibers or reinforcement and is formed of a single material.

The article 60 includes one or more features 68 that are formed in the ceramic material by machining, as opposed to features that may be formed during ceramic processing. The features 68 may be, but are not limited to, cooling through-holes, blind holes, slots, ledges, divots, and the like. The ceramic material of the article 60 is porous. Such porosity at the surface of the article 60 may permit facile infiltration of oxygen, moisture, or other substances that can participate in, or accelerate, undesired reactions with one or more elements in the ceramic material. The article 60, however, may include an oxide surface barrier that seals the pores to provide a closed-pore surface. This oxide may be formed during ceramic processing or during a post treatment process, or may be present in a protective coating that is applied to the article 60. The machining is a subtractive manufacturing process. Therefore, at the locations of the features 68 where the article 60 is machined, the oxide may be locally removed, thereby revealing open-pore machined surfaces. In this regard, as further discussed below, the article 60 is subjected to a post-treatment to re-seal the open-pore machined surfaces.

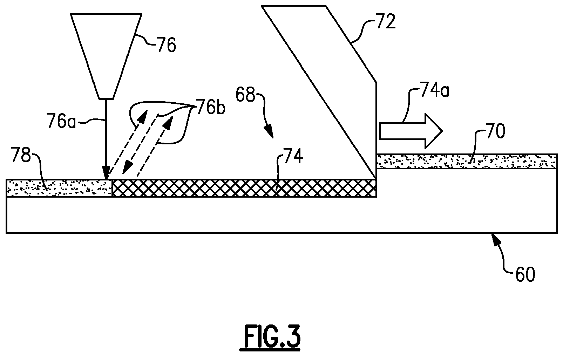

Figure 3 depicts an example of the post-treatment method to re-seal the article 60. In the region of the feature 68 shown, there is a closed-pore surface 70 that is yet-to-be machined. The closed-pore surface 70 includes an oxide that is formed during ceramic processing or during a post treatment process, or that is present in a protective coating that is applied to the article 60. For example, the oxide is a silicon oxide, such as silica that is derived from the silicon of the silicon-containing ceramic from which the article 60 is formed.

In the example shown, a tool 72 machines the closed-pore surface 70 to remove material and thus form the feature 68. The tool 72 may be, but is not limited to, a milling tool or a grinding tool. In this example, the machining is conducted along a first direction 74a by moving the tool 72 relative to the article 60. In this regard, the machining may be conducted in a manner known to those of ordinary skill in the art by mounting the article 60 in a fixture of a computer numerical control (CNC) machine. The machining causes removal of the closed-pore surface 70 to produce an open-pore machined surface 74. The open-pore machined surface 74 has an open pore volume that is substantially greater than the open-pore volume of the closed-pore surface 70. For example, the open-pore volume of the open-pore machined surface 74 is greater than the open pore volume of the closed-pore surface 70 by 10 % or more.

If left untreated, the open-pore machined surface 74 may permit infiltration of oxygen, moisture, or other substances that can participate in, or accelerate, undesired reactions that may reduce durability of the article 60. To re-seal the article 60, the open-pore machined surface 74 is laser-treated. In the illustrated example, a laser head 76 emits a laser beam 76a onto the open-pore machined surface 74. The laser beam 76a heats the open-pore machined surface 74 to facilitate the formation of an oxide that plugs and thus seals the pores of the open-pore machined surface to produce a closed-pore treated surface 78. While not wishing to be bound, it is believed that the heat mobilizes silicon or silicon-containing phases in the silicon-containing ceramic to move to the pores where the silicon readily oxidizes to silicon oxide (e.g., silica) and immobilizes to plug the pores. The closed-pore treated surface 78 thus has an open pore volume that is substantially less than the open pore volume of the open-pore machined surface 74. For example, the open-pore volume of the closed-pore treated surface 78 is less than the open pore volume of the open-pore machined surface 74 by 10 % or more.

The laser-treatment may be conducted concurrently with the machining. For instance, as shown, the laser beam 76a follows closely behind the tool 72 to treat the open-pore machined surface 74 as it is produced from the tool 72. In this regard, the laser-treatment and machining are conducted concurrently, i.e. overlapping in time, such that the feature 68 of the article 60 is machined and re-sealed in a single, continuous process. As the diameter of the laser beam 76a is smaller than the path machined by the tool 72, the laser beam 76a is scanned over a scanning path across the open-pore machined surface 74. For example, the laser beam 76a is scanned in one or more second directions 76b that are non-parallel to the first direction 74a along which the machining is conducted. That is, the laser beam 76a may be scanned back-and-forth across the machined path in order to treat the full area of the open-pore machined surface 74 as it is produced from the tool 72. In one further example, the second direction or direction is/are transverse (90 degrees) to the first direction 74a.

The parameters of the laser-treatment may be adapted to the particular process implementation to minimize material removal. That is, the machining provides bulk removal to substantially form the desired geometry of the feature 68, while the laser-treatment re-seals the surface and removes little or no material.

The disclosed re-sealing may facilitate the elimination of a post-machining seal coating processes. For instance, chemical vapor infiltration and other deposition processes may be used to form dense surface seal coatings on machined surfaces. Such post-machining processes, however, may add cost and choke production process throughput. Thus, by sealing It is to be appreciated that the disclosed examples may also be used where there is little or no initial sealing from an oxide. For instance, the laser-treatment may be used on machined surfaces as discussed above but may then also be used on adjacent non-machined surfaces to provide sealing.

Although a combination of features is shown in the illustrated examples, not all of them need to be combined to realize the benefits of various embodiments of this disclosure. In other words, a system designed according to an embodiment of this disclosure will not necessarily include all of the features shown in any one of the Figures or all of the portions schematically shown in the Figures. Moreover, selected features of one example embodiment may be combined with selected features of other example embodiments.

The preceding description is exemplary rather than limiting in nature. Variations and modifications to the disclosed examples may become apparent to those skilled in the art that do not necessarily depart from this disclosure. The scope of legal protection given to this disclosure can only be determined by studying the following claims.

## Claims

1. A method comprising:
machining a closed-pore surface (70) of a silicon-containing gas turbine engine article (60) to produce a feature (68), the machining causing removal of the closed-pore surface (70) to produce an open-pore machined surface (74); and
laser-treating the open-pore machined surface (74), the laser-treating causing formation of an oxide in the silicon-containing gas turbine engine article (60) that seals the open-pore machined surface (74) to produce a closed-pore treated surface (78).

2. The method as recited in claim 1, wherein the silicon-containing gas turbine engine article (60) is a ceramic matrix composite (CMC).

3. The method as recited in claim 2, wherein the CMC includes silicon carbide.

4. The method as recited in claim 2, wherein the CMC includes silicon nitride.

5. The method as recited in claim 2, wherein the CMC is selected from the group consisting of silicon carbide, silicon nitride, and combinations thereof.

6. The method as recited in any preceding claim, wherein the machining and the laser-treating are conducted concurrently.

7. The method as recited in claim 6, wherein the machining is conducted along a first direction (74a), and the laser-treatment includes scanning a laser beam (76a) across the open-pore machined surface (74) in a second direction (76b) that is non-parallel to the first direction (74a).

8. The method as recited in claim 7, wherein the second direction (76b) is transverse to the first direction (74a).

## Patentansprüche

1. Verfahren, umfassend:
Bearbeiten einer geschlossenporigen Oberfläche (70) eines siliciumhaltigen Gasturbinentriebwerksgegenstands (60) zum Produzieren eines Merkmals (68), wobei das Bearbeiten die Entfernung der geschlossenporigen Oberfläche (70) unter Produzieren einer offenporigen bearbeiteten Oberfläche (74) bewirkt; und
Laserbehandeln der offenporigen bearbeiteten Oberfläche (74), wobei das Laserbehandeln eine Bildung eines Oxids in dem siliciumhaltigen Gasturbinentriebwerksgegenstand (60) bewirkt, das die offenporige bearbeitete Oberfläche (74) unter Produzieren einer geschlossenporigen behandelten Oberfläche (78) abdichtet.

2. Verfahren nach Anspruch 1, wobei der siliciumhaltige Gasturbinentriebwerksgegenstand (60) ein Keramikmatrixverbundstoff (CMC) ist.

3. Verfahren nach Anspruch 2, wobei der CMC Siliciumcarbid beinhaltet.

4. Verfahren nach Anspruch 2, wobei der CMC Siliciumnitrid beinhaltet.

5. Verfahren nach Anspruch 2, wobei der CMC ausgewählt ist aus der Gruppe, bestehend aus Siliciumcarbid, Siliciumnitrid und Kombinationen davon.

6. Verfahren nach einem der vorhergehenden Ansprüche, wobei das Bearbeiten und das Laserbehandeln gleichzeitig durchgeführt werden.

7. Verfahren nach Anspruch 6, wobei das Bearbeiten entlang einer ersten Richtung (74a) durchgeführt wird und das Laserbehandeln Scannen eines Laserstrahls (76a) über die offenporige bearbeitete Oberfläche (74) in einer zweiten Richtung (76b) nicht parallel zu der ersten Richtung (74a) beinhaltet.

8. Verfahren nach Anspruch 7, wobei die zweite Richtung (76b) quer zu der ersten Richtung (74a) verläuft.

## Revendications

1. Procédé comprenant :
l'usinage d'une surface à pores fermés (70) d'un article de moteur à turbine à gaz contenant du silicium (60) pour produire une caractéristique (68), l'usinage provoquant l'élimination de la surface à pores fermés (70) pour produire une surface usinée à pores ouverts (74) ; et
le traitement laser de la surface usinée à pores ouverts (74), le traitement au laser provoquant la formation d'un oxyde dans l'article de moteur à turbine à gaz contenant du silicium (60) qui scelle la surface usinée à pores ouverts (74) pour produire une surface traitée à pores fermés (78).

2. Procédé selon la revendication 1, dans lequel l'article de moteur à turbine à gaz contenant du silicium (60) est un composite à matrice céramique (CMC).

3. Procédé selon la revendication 2, dans lequel le CMC comporte du carbure de silicium.

4. Procédé selon la revendication 2, dans lequel le CMC comporte du nitrure de silicium.

5. Procédé selon la revendication 2, dans lequel le CMC est choisi dans le groupe constitué du carbure de silicium, du nitrure de silicium et de combinaisons de ceux-ci.

6. Procédé selon une quelconque revendication précédente, dans lequel l'usinage et le traitement laser sont réalisés simultanément.

7. Procédé tel que décrit dans la revendication 6, dans lequel l'usinage est réalisé le long d'une première direction (74a), et le traitement laser comporte le balayage d'un faisceau laser (76a) sur la surface usinée à pores ouverts (74) dans une seconde direction (76b) qui n'est pas parallèle à la première direction (74a).

8. Procédé selon la revendication 7, dans lequel la seconde direction (76b) est transversale par rapport à la première direction (74a).
